# EUROPÄISCHE PATENTANMELDUNG

(11) **EP 4 621 252 A1**
(43) Veröffentlichungstag der Anmeldung: **24.09.2025**
(21) Anmeldenummer: 24165632.1
(22) Anmeldetag: 22.03.2024
(51) Int. Cl.: F16C 23/04

(54) **SCHWENKSÄULENLAGER FÜR EINEN SCHWENKBAREN FLOSSENSTABILISATOR**

(71) Anmelder: Aktiebolaget SKF, 415 50 Göteborg (SE); SKF Marine GmbH, 20457 Hamburg (DE)
(72) Erfinder: Noeth, Mathias, 97535 Wasserlosen (DE); Niedostatek, Mark, 21279 Wenzendorf (DE); Möller, Uwe, 23843 Bad Oldesloe (DE); Otto, Aaron, 22111 Hamburg (DE); Vogt, Dennis, 21435 Stelle (DE); Psyk, Christoph, 20357 Hamburg (DE); Schulz, Linda, 22459 Hamburg (DE); Spardel, Holger, 22081 Hamburg (DE); Mensch, Joachim, 21109 Hamburg (DE); Winkler, Peter, 25469 Halstenbek (DE); Niemeier, Ralf, 21614 Buxtehude (DE)
(74) Vertreter: Kuhstrebe, Jochen

(57) **Zusammenfassung**

Offenbart ist ein Schwenksäulenlager für einen Flossenstabilisator von Wasserfahrzeugen, das zumindest ein sphärisches Gleitlager hat, sowie ein Flossenstabilisator.

## Beschreibung

Die Erfindung bezieht sich auf ein Schwenksäulenlager für einen schwenkbaren Flossenstabilisator nach dem Oberbegriff des Anspruchs 1 und einen Flossenstabilisator.

Flossenstabilisatoren werden zur Rollstabilisierung eines Wasserfahrzeugs in Fahrt, vor Anker oder bei Nullgeschwindigkeit und/oder zur Kursbeeinflussung des Wasserfahrzeuges eingesetzt. Bekannte schwenkbare Flossenstabilisatoren haben eine Stabilisatorflosse, die in Ruhestellung in einen Flossenkasten eingeschwenkt ist. In einer Arbeitsstellung ist die Stabilisatorflosse um eine Schwenkachse aus dem Flossenkasten herausgeschwenkt und kann somit um ihre Hochachse Auf- und Abbewegungen ausführen.

Entlang der Schwenkachse erstreckt sich eine Schwenksäule, von der sich seitlich die Stabilisatorflosse erstreckt. Zur schwenkbaren Lagerung der Schwenksäule ist ein sogenanntes Schwenksäulenlager vorgesehen. Das Schwenksäulenlager hat ein unteres Lager und ein oberes Lager zur Führung der Schwenksäule an ihren Enden. Die Lager haben zylindrische Gleitlagerflächen und sind jeweils in Wandungsabschnitte (auch Topp- und Bodenplatte genannt) des Flossenkasten integriert. Gewöhnlich werden die Lager in Öffnungen der Wandungsabschnitte eingesetzt und an diesen verschraubt. Der Flossenkasten selber wird in eine Rumpföffnung des Wasserfahrzeugs eingeschweißt. Aufgrund von beim Verschweißen auftretenden thermischen Belastungen können sich Fluchtfehler zwischen den Lagern einstellen. Diese Fluchtfehler können zu einem Klemmen und/oder einer Beschädigung des Lagers führen. Zum Ausgleich der Fluchtfehler ist das Schwenksäulenlager gewöhnlich mit einem axialen und /oder radialen Spiel versehen, dass die Fluchtfehler auch in einem sehr ungünstigen Fall ausgleichen kann, um eine Beschädigung der Lager und/oder der Schwenksäule und ein Klemmen im Betrieb nach Möglichkeit zu verhindern. Wenn jedoch kein bzw. nur ein minimaler Fluchtfehler zwischen den Lagern vorliegt, ist die Spielpassung zu groß, was ebenfalls zu einer Beschädigung der Gleitlager und/oder Schwenksäule und zu einer hohen Geräuschentwicklung führen kann. Weiterhin kann versucht werden, wenn das Spiel nicht mehr vorhanden ist, auf ein Unterfüttern mit Linearblechen zurückzugreifen oder Nacharbeiten der Lager nach dem Einbau des Flossenstabilisators im Schiff vorzunehmen, um ein Klemmen der Lagerung nach Inbetriebnahme des Schiffes zu verhindern bzw. zu beheben.

Der Erfindung liegt die Aufgabe zu Grunde, ein Schwenksäulenlager für einen schwenkbaren Flossenstabilisator von Wasserfahrzeugen zu schaffen, das sowohl einen automatischen Ausgleich von Fluchtfehlern, aber auch einen verlässlichen Betrieb im Falle von minimalen bzw. bei fehlenden Fluchtfehlern ermöglicht, sowie einen Flossenstabilisator mit einer optimiert geführten Stabilisatorflosse zu schaffen.

Diese Aufgabe wird gelöst durch ein Schwenksäulenlager mit den Merkmalen des Patentanspruchs 1 und durch einen Flossenstabilisator mit den Merkmalen des Patentanspruchs 9. Vorteilhafte Ausgestaltungen ergeben sich aus den Unteransprüchen.

Ein erfindungsgemäßes Schwenksäulenlager für einen Flossenstabilisator von Wasserfahrzeugen hat ein oberes Lager und ein unteres Lager zur Lagerung einer um ihre Hochachse (Schwenkachse) verschwenkbare Schwenksäule einer Stabilisatorflosse. Erfindungsgemäß hat/haben das obere Lager und/oder das untere Lager sphärische Gleitlagerflächen.

Ein erfindungsgemäßer Flossenstabilisator hat eine erfindungsmäße Schwenksäulenlagerung.

Als Schwenksäule wird im Sinne der Erfindung eine Vorrichtung verstanden, mittels der alle Kräfte, die an einer Stabilisatorflosse entstehen, in das Schiff eingeleitet werden. Durch die Sphärizität bzw. Balligkeit können Fluchtfehler bzw. Winkelversätze zwischen den Gleitlagern bei gleichbleibendem Spiel ausgeglichen werden. Der Ausgleich erfolgt dabei automatisch, ohne dass Korrekturmaßnahmen oder Einstellungen von außen vorzunehmen sind. Das erfindungsgemäße Schwenksäulenlager kann somit mit einer optimalen Passung hergestellt werden. Eine Schmiermittelversorgung ist derart, dass beim Umschalten der Lastrichtung das Schmiermittel wie Fett durch die Lager und entsprechende Freiräume gepresst wird. Die Sphären der Lager dienen hier nun als Führung. Durch diese Maßnahme wird ein sogenanntes Umschaltklacken deutlich reduziert oder gar eliminiert.

Die sphärische Gleitlagerfläche des unteren Lagers ist bevorzugt an einer Lagerbuchse ausgebildet, die mit einer zylindrischen Lagerfläche eines schwenksäulenseitigen Lagerings zusammenwirkt. Der Lagerring, der die Schwenksäule umgreift, lässt sich aufgrund seiner zylindrischen Lagerfläche fertigungstechnisch einfach herstellen. Bevorzugterweise ist das untere Lager als ein Loslager ausgeführt. Die Lagerbuchse kann eine Bronzebuchse sein. Möglich ist es auch, das obere Lager als Loslager auszuführen. Als Loslager wird ein Lager verstanden, dass ausschließlich bzw. nahezu ausschließlich radiale Kräfte überträgt (Reibung außer Acht gelassen). Es wird vorrangig zum Ausgleich von Höhenunterschieden/-verschiebungen verwendet.

Die Fertigung der sphärische Gleitlagerfläche des unteren Lagers lässt sich vereinfachen, wenn diese aus konischen Abschnitten und einem zylindrischen Abschnitt hergestellt ist. Die konischen Abschnitte können zum Beispiel entgegengesetzt zueinander ansteigend orientiert sein und durch den zylindrischen Abschnitt ineinander übergehen. Über die Winkelstellungen der konischen Abschnitte und insbesondere auch über deren Länge sowie die Länge des zylindrischen Abschnitts lässt sich die Sphärizität des unteren Lagers einstellen.

Bei einem Ausführungsbeispiel ist das untere Lager als ein Loslager ausgeführt. Hierzu hat es eine sphärische Lagerung zum Ermöglichen von Kippbewegungen der Schwenksäule und eine zylindrische Lagerung zum Ermöglichen von axialen Verschiebungen der Schwenksäule.

Die sphärische Gleitlagerfläche des oberen Lagers ist bevorzugterweise an einer gehäuseseitigen Lagerschale ausgebildet und wirkt mit einer korrespondierenden sphärischen Lagerfläche eines schwenksäulenseitigen Lagerings zusammen. Der Lagerring ist auf die Schwenksäule aufgesetzt. Dadurch, dass diese beiden Lagerflächen korrespondierend ausgebildet sind, wird in jeder Winkelstellung eine großflächige Führung bzw. Abstützung des Lagerings an der Lagerschale erreicht, wodurch eine optimierte Einleitung von auf die Stabilsatorflosse wirkende Betriebslasten in die Schiffstruktur erfolgt. Bevorzugterweise ist das obere Lager als ein Festlager ausgeführt. Grundsätzlich kann jedoch auch das untere Lager als Festlager ausgeführt sein. Mit Festlager ist hier dasjenige von beiden Lagern gemeint, welches sowohl radiale als auch axiale Kräfte überträgt.

Insbesondere ist es zur radialen und axialen Stützung der Stabilisatorflosse vorteilhaft, wenn die sphärische Gleitlagerfläche des oberen Lagers und die korrespondierende sphärische Lagerfläche mit ihren unteren Bereichen radial innen zu ihren oberen Bereichen angeordnet sind. Mit anderen Worten, ein Mittelpunkt der Sphäre der Lagerschale befindet sich oberhalb der Lagerschale. Die Ausrichtung der "Krümmung" bzw. des Sphärenabschnitts ist derart, dass sich seine Fläche von unten nach oben vergrößert.

Der Lagerring des oberen Lagers kann an seinen vom unteren Lager abgewandten Kopfabschnitt eine zweite sphärische Lagerfläche aufweisen, die entgegengesetzt zur ersten sphärischen Lagerfläche orientiert ist und mit einer korrespondierenden Gleitfläche eines radial verschiebbaren Lagerdeckels zusammenwirkt. Durch diese Maßnahme hat das obere Lager zwei Sphären, welche nicht den gleichen Drehmittelpunkt haben. Bei einer Auslenkung wie in Folge eines Fluchtfehlers wird der Lagerdeckel radial verschoben. Diese Verschiebung findet als Ausgleich während des Einbaus, z.B. durch Schweißen, des Flossenstabilisators im Schiff statt und ist grundsätzlich nur während dieser Phase notwendig. Der Transfer von Betriebslasten in die Schiffstruktur ist durch die korrespondierenden Flächen weiterhin gegeben. Insbesondere befindet sich ein Mittelpunkt der Sphäre des Lagerdeckels unterhalb des Lagerdeckels. Bei diesem Ausführungsbeispiel ist die Lagerschale so ausgeführt, dass während einer Schwenkbewegung die Schwenksäule im Regelfall nach unten gedrückt wird (durch die Schwerkraft). Denn geschwenkt wird bevorzugterweise nur dann, wenn die Stabilisatorflosse in Neutralstellung steht und nahezu keine Auftriebskräfte erzeugt. Die Lagerschale kann zudem radiale und axiale Kräfte übertragen, der Lagerdeckel kann es nicht (weil er radial ausweicht).

Bevorzugterweise ist der Lagerdeckel oberhalb der Lagerschale radial verschiebbar zum Druckring geführt. Die Gleitfläche befindet sich zwischen Druckring und Lagerdeckel. Ein Kontakt zwischen dem Lagerdeckel und der Lagerschale sollte vermieden werden. Idealerweise ist zwischen dem Lagerdeckel und der Lagerschale stets ein Axialspalt gebildet. Der Axialspalt bewirkt, dass der Lagerdeckel, der sich radial verschieben können muss, nicht zwischen Druckring und Lagerschale eingeklemmt wird. Die beiden Flächen zwischen Lagerdeckel und Lagerschale stehen somit aufgrund des Axialspaltes in keinem direkten funktionellen Zusammenhang.

Insbesondere kann die zweite Lagerfläche des oberen Lagerrings eine kürzere axiale Erstreckung als die erste haben. Entsprechend axial kurz (flach) lässt sich der Lagerdeckel ausführen. Es hat sich nämlich gezeigt, dass bei der Schwenkbewegung lediglich die untere Sphäre Lasten (Gewichtskraft) überträgt. Daher kann die obere Sphäre kleiner ausgeführt werden. Beim Schwenken der Stabilisatorflosse in Neutralstellung erzeugt diese keine nennenswerten bzw. nahezu keine Auftriebskräfte.

Im Folgenden wird ein bevorzugtes Ausführungsbeispiel des erfindungsgemäßen Flossenstabilisators anhand von stark vereinfachten Figuren näher erläutert werden. Es zeigen
- Figur 1:: einen Längsschnitt durch ein Ausführungsbeispiel eines erfindungsgemäßen Schwenksäulenlagers,
- Figur 2:: eine Detailansicht des unteren Lagers aus Figur 1, ausgeführt als Festlager,
- Figur 3:: eine schematische Ansicht des unteren Lagers aus den Figuren 1 und 2,
- Figur 4:: eine Detailansicht des oberen Lagers aus Figur 1, ausgeführt als Festlager, und
- Figur 5: eine Detailansicht eines unteren Lagers, ausgeführt als Loslager.

Angaben wie "axial" und "radial" beziehen sich im Sinne der Erfindung auf eine Schwenkachse bzw. Hochachse einer Schwenksäule des schwenkbaren Flossenstabilisators und Angaben wie "oben" und "unten" auf die Einbaulage des Flossenstabilisators in einem Schiff. Gewöhnlich wird der Flossenstabilisator in einem Einbauwinkel von 0° bis 45° in den Schiffsrumpf eingeschweißt.

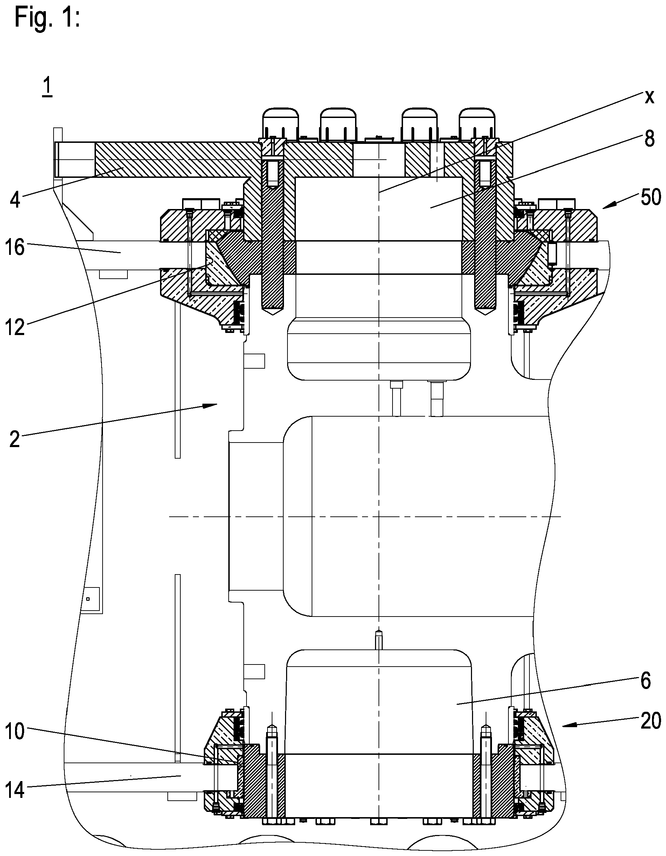

In Figur 1 ist ein Schnitt entlang einer Schwenkachse X bzw. Hochachse eines beispielhaften Schwenksäulenlagers 1 gezeigt. Das Schwenksäulenlager 1 ist eine Komponente eines Flossenstabilisators zur Rollstabilisierung bei Schiffen. Das Schwenksäulenlager 1 ermöglicht die Verschwenkung einer, eine Stabilisatorflosse tragendenden Schwenksäule 2 um die Schwenkachse X. Zum Schwenken der Schwenksäule 2 ist an dieser ein Schwenkarm 4 befestigt, der mit einem nicht gezeigten geeigneten z.B. hydraulischen oder elektromotorischen Antrieb in Wirkverbindung steht.

Das Schwenksäulenlager 1 hat ein unteres Lager 20 und ein oberes Lager 50, die jeweils einen Endabschnitt 6, 8 der Schwenksäule 2 umgreifen und in gegenüberliegenden Öffnungen 10, 12 eines unteren und eines oberen Wandungsabschnitts 14, 16 eines Flossenkasten eingesetzt sind.

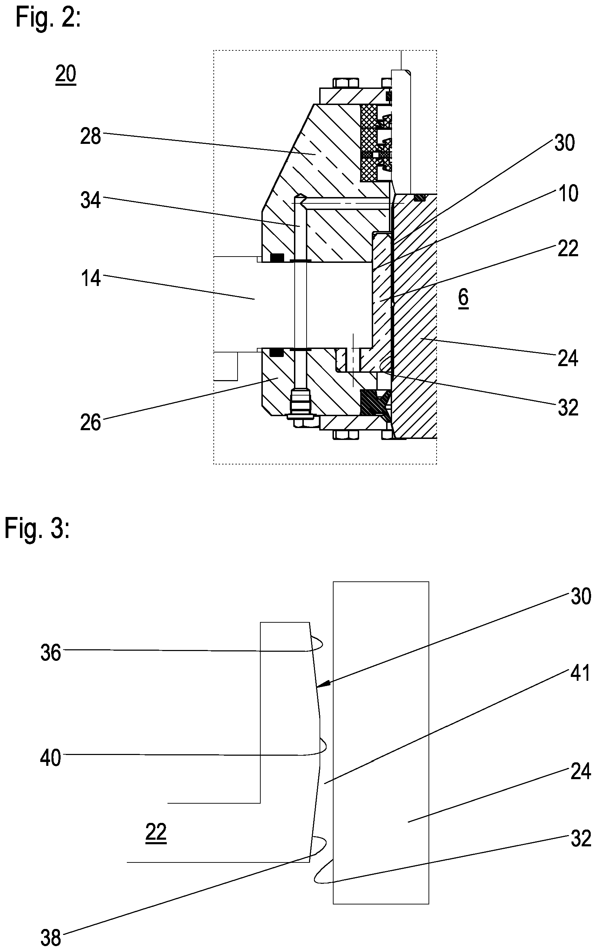

Wie in Figur 2 beziffert hat das untere Lager 20 eine gehäuseseitige Lagerbuchse 22 und einen säulenseitigen Lagerring 24. Es ist hier als Loslager ausgeführt. Der Lagerring 24 ist fest auf dem unteren Endabschnitt 6 der Schwenksäule 2 aufgesetzt bzw. mit diesem verschraubt und drehbar in der Lagerbuchse 22 geführt. Die Lagerbuchse 22 ist in die untere Öffnung 10 eingesetzt und mittels einem äußeren Ringdeckel 26 und einem inneren Traglagerdeckel 28 mit dem unteren Wandungsabschnitt 14 verspannt. Zur Zuführung von Schmiermittel zu Führungsflächen 30, 32 des unteren Lagers 20 ist in dem unteren Lager 20 eine Schmiermittelversorgung 34 integriert.

Gemäß der Detaildarstellung in Figur 3 ist die Führungsfläche bzw. Gleitlagerfläche 30 der Lagerbuchse 22 des unteren Lagers 20 sphärisch bzw. quasi ballig ausgeführt. Die mit dieser unteren sphärischen Gleitlagerfläche 30 zusammenwirkenden Führungsflächen bzw. Lagerfläche 32 des Lagerrings 24 ist zylindrisch. Die Sphärizität ist bei diesem Ausführungsbeispiel dadurch erreicht, dass die sphärische Gleitlagerfläche 30 in zwei äußere konische Abschnitte 36, 38 und einen mittigen zylindrischen Abschnitt 40 unterteilt ist. Die beiden konischen Abschnitte 36, 38 sind entgegengesetzt zueinander orientiert, derart, dass der sie miteinander verbindende zylindrische Abschnitt 40 radial innen zu den konischen Abschnitten 36, 38 liegt. Ein in Figur 3 gezeigter Ringspalt 41 zwischen der Lagerbuchse 22 und dem Lagerring 24 ist zum Betrieb des unteren Lagers zweckdienlich.

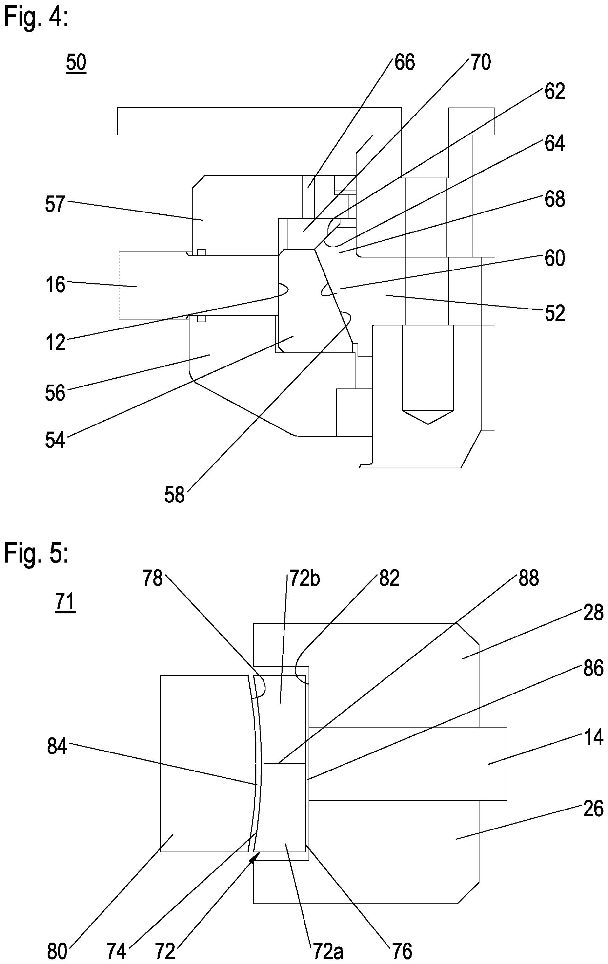

In Figur 4 ist eine Detaildarstellung des oberen Lagers 50 gezeigt. Dieses ist hier als Festlager ausgeführt. Es hat einen säulenseitigen Lagerring 52, der den oberen Endabschnitt 8 der Schwenksäule 2 umgreift und mit diesem fest verbunden ist. Der Lagerring 52 ist in einer gehäuseseitigen Lagerschale 54 radial geführt. Die Lagerschale 54 ist in die Öffnung 12 des oberen Wandungsabschnitts 16 des Flossenkastens eingesetzt und gegen Verdrehen gesichert. Ein äußerer Traglagerring 56 und ein innerer Druckring 57 sind mit dem oberen Wandungsabschnitt 16 verspannt. Zur Zuführung von Schmiermittel zu Führungsflächen 58, 60, 62, 64 des oberen Lagers 50 ist in diesem eine nicht dargestellte Schmiermittelversorgung vorgesehen. Zur indirekten Messung eines Axialspiels kann im Druckring 57 eine Axialbohrung 66 vorgesehen sein.

Sowohl der Lagerring 52, als auch die Lagerschale 54 haben eine sphärische Führungsfläche 58, 60. Die sphärische Führungsfläche bzw. Gleitlagerfläche 58 der Lagerschale 54 und die sphärische Führungsfläche bzw. Lagerfläche 60 des Lagerrings 52 sind korrespondierend zueinander ausgebildet. Sie sind derart zueinander orientiert, dass sie mit ihren unteren Bereichen radial innen zu ihren oberen Bereichen angeordnet sind.

Neben dieser einen Sphärizität weist das obere Lager 50 eine zweite Sphärizität auf. Hierzu hat der obere Lagerring 52 an seinem von dem unteren Lager 20 abgewandten Kopfabschnitt 68 eine zweite sphärischen Lagerfläche 62, die entgegengesetzt zur ersten sphärischen Lagerfläche 60 orientiert ist und mit einer korrespondierenden Gleitfläche 64 eines Lagerdeckels 70 zusammenwirkt. Dabei hat die zweite Lagerfläche 62 des oberen Lagerrings 52 und somit die Gleitfläche 64 des Lagerdeckels 70 eine kürzere axiale Erstreckung als die erste Lagerfläche 60 des oberen Lagerrings 52. Der Lagerdeckel 70 ist auf dem Lagerring 52 abgelegt und radial gegenüber dem Druckring 57 verschiebbar. Ein Kontakt zwischen dem Lagerdeckel 70 und der Lagerschale 54 ist zu vermeiden. Eine axial nach oben wirkende Kraft wird über den Lagerdeckel 70 an den Druckring 57 weitergegeben. Insbesondere befindet sich ein Mittelpunkt der Sphäre der Lagerschale 54 oberhalb der Lagerschale 54. Ein Mittelpunkt der Sphäre des Lagerdeckels 70 befindet sich unterhalb des Lagerdeckels 70.

Erfindungsgemäß werden Fluchtfehler der Lager 20, 50 zueinander über die Sphärizität bzw. Balligkeit ihrer Führungsflächen 30, 32 sowie 58, 60, 62, 64 ausgeglichen.

Wird die Schwenksäule 2 infolge eines Fluchtfehlers mit einer Winkelstellung beaufschlagt, kann sie sich aufgrund der Sphärizität ihrer Lager 20, 50 entsprechend neigen. Aufgrund ihrer Neigung wird der obere Lagerdeckel 70 durch den Kopfabschnitt des oberen Lagerrings 52 radial verschoben. Die Sphärizität gewährleistet dabei nicht nur eine Neigung der Schwenksäule 2, sondern insbesondere einen gleichbleibenden/weiterhin größtmöglichen Flächenkontakt zwischen den Führungsflächen 30, 32 sowie 58, 60, 62, 64 und somit eine optimale Einleitung von auf die Stabilisatorflosse wirkenden Betriebslasten in die Schiffsstruktur.

In Figur 5 ist ein unteres Lager 71 im Gegensatz zu dem Ausführungsbeispiel in den Figuren 1, 2 und 3 als Loslager mit zwei sphärischen Lagerflächen ausgeführt. Hierzu hat das untere Lager 71 eine Lagerschale 72 mit einer radial inneren sphärischen Lagerfläche 74 und einer radial äußeren zylindrischen Lagerfläche 76. Die sphärische Lagerfläche 72 wirkt mit einer korrespondierenden sphärischen Gegenfläche 78 eines säulenseitigen Lagerrings 80 zusammen. Die zylindrische Lagerfläche 76 wirkt mit einer korrespondierenden zylindrischen Gegenfläche 82 eines gehäuseseitigen Ringdeckels 26, eines gehäuseseitigen Traglagerdeckels 28 und/oder eines Wandungsabschnittes 14 des Flossenkastens zusammen, so dass eine Kraft indirekt über den Traglagerdeckel 28 und den Ringdeckel 26 auf den Wandungsabschnitt 14 übertragen wird oder direkt in den Wandungsabschnitt 14 eingeleitet wird.

Die sphärische Lagerung 74, 78 ermöglicht Kippbewegungen der in Figur 1 gezeigten Schwenksäule 2. Die zylindrische Lagerung 76, 82 ermöglicht eine Verschiebung der Schwenksäule 2 entlang ihrer Schwenkachse x.

Um ein Klemmen der Lagerungen 74, 78 und 76, 82 zu vermeiden, sind entsprechende Lagerspalte 84, 86 zwischen den miteinander in Gleitwirkung stehenden Lagerteilen 74, 78 und 76, 82 vorgesehen.

Zur Vereinfachung der Montage kann die Lagerschale 80 in Querrichtung zweigeteilt (Trennebene 88) und somit aus zwei Schalenhälften 72a, 72b zusammengesetzt sein. Ebenso kann eine Trennung in vertikaler Richtung (nicht dargestellt) erfolgen.

Offenbart ist ein Schwenksäulenlager für einen Flossenstabilisator von Wasserfahrzeugen, das zumindest ein sphärisches Gleitlager hat, sowie ein Flossenstabilisator.

### Bezugszeichenliste

- 1: Schwenksäulenlager
- 2: Schwenksäule
- 4: Schwenkarm
- 6: Endabschnitt Schwenksäule
- 8: Endabschnitt Schwenksäule
- 10: Öffnung
- 12: Öffnung
- 14: Wandungsabschnitt Flossenkasten
- 16: Wandungsabschnitt Flossenkasten
- 20: unteres Lager
- 22: Lagerbuchse
- 24: Lagerring
- 26: Ringdeckel
- 28: Traglagerdeckel
- 30: Führungsfläche bzw. Gleitlagerfläche
- 32: Führungsfläche bzw. Lagerfläche
- 34: Schmiermittelversorgung
- 36: konischer Abschnitt
- 38: konischer Abschnitt
- 40: zylindrischer Abschnitt
- 41: Ringspalt
- 50: oberes Lager
- 52: Lagerring
- 54: Lagerschale
- 56: Traglagerring
- 57: Druckring
- 58: Führungsfläche bzw. Gleitlagerfläche
- 60: Führungsfläche bzw. Lagerfläche
- 62: Führungsfläche bzw. zweite Lagerfläche
- 64: Führungsfläche bzw. Gleitfläche
- 66: Bohrung zur indirekten Messung des Axialspiels 68 Kopfabschnitt
- 70: Lagerdeckel
- 71: unteres Lager (Loslager mit zwei sphärischen Flächen)
- 72: Lagerschale
- 72a,: bLagerschalenhälfte
- 74: sphärische Lagerfläche
- 76: zylindrische Lagerfläche
- 78: sphärische Gegenfläche
- 82: zylindrische Gegenfläche
- 84: Lagerspalt
- 86: Lagerspalt
- 88: Trennebene

- X: Schwenkachse

## Patentansprüche

1. Schwenksäulenlager (1) für einen schwenkbaren Flossenstabilisator von Wasserfahrzeugen, mit einem oberen Lager (50) und einem unteren Lager (20, 71) zur Lagerung einer um ihre Hochachse (X) verschwenkbaren Schwenksäule (2) einer Stabilisatorflosse, **dadurch gekennzeichnet, dass** das obere Lager (50) und/oder das untere Lager (20) sphärische Führungsflächen (30, 32, 58, 60, 62, 64) haben/hat.

2. Schwenksäulenlager nach Patentanspruch 1, wobei die sphärische Gleitlagerfläche (30) des unteren Lagers (20) an einer Lagerbuchse (22) ausgebildet ist und mit einer zylindrischen Lagerfläche (32) eines schwenksäulenseitigen Lagerings (24) zusammenwirkt.

3. Schwenksäulenlager nach Patentanspruch 1 oder 2, wobei die sphärische Gleitlagerfläche (30) des unteren Lagers (20) aus zwei konischen Abschnitten (36, 38) und einem zwischen den konischen Abschnitten (36, 38) angeordneten zylindrischen Abschnitt (40) gebildet ist.

4. Schwenksäulenlager nach Patentanspruch 1 oder 2, wobei das untere Lager (71) eine sphärische Lagerung (74, 78) und eine zylindrische Lagerung (76, 82) aufweist.

5. Schwenksäulenlager nach einem der vorhergehenden Patentansprüche, wobei die sphärische Gleitlagerfläche (58) des oberen Lagers (50) an einer gehäuseseitigen Lagerschale (54) ausgebildet ist und mit einer korrespondierenden sphärische Lagerfläche (60) eines schwenksäulenseitigen Lagerings (52) zusammenwirkt.

6. Schwenksäulenlager nach Patentanspruch 5, wobei die sphärische Gleitlagerfläche (58) des oberen Lagers (50) und die korrespondierende sphärische Lagerfläche (60) mit ihren unteren Bereichen radial innen zu ihren oberen Bereichen angeordnet sind.

7. Schwenksäulenlager nach Patentanspruch 5 oder 6, wobei der Lagerring (52) an seinen vom unteren Lager (20, 71) abgewandten Kopfabschnitt (68) eine zweite sphärischen Lagerfläche (62) aufweist, die entgegengesetzt zur ersten sphärischen Lagerfläche (60) orientiert ist und mit einer korrespondierenden sphärischen Gleitfläche (64) eines radialverschiebbaren Lagerdeckels (70) zusammenwirkt.

8. Schwenksäulenlager nach Patentanspruch 7, wobei der Lagerdeckel (70) radial verschiebbar zum Druckring (57) geführt ist.

9. Schwenksäulenlager nach Patentanspruch 7 oder 8, wobei die zweite Lagerfläche (62) des oberen Lagerrings (52) eine kürzere axiale Erstreckung als die erste Lagerfläche (60) hat.

10. Flossenstabilisator mit einer Schwenksäulenlagerung (1) nach einem der vorhergehenden Patentansprüche.
